# EUROPÄISCHE PATENTSCHRIFT

(11) **EP 1 926 380 B1**
(45) Veröffentlichungstag und Bekanntmachung des Hinweises auf die Patenterteilung: **02.06.2010**
(21) Anmeldenummer: 06791681.7
(22) Anmeldetag: 26.08.2006
(51) Int. Cl.: A01N 51/00, A01N 47/40, A01N 43/40, A01N 25/30, A01N 25/04, A01N 25/00, A01P 7/00

(54) **VERWENDUNG VON CNI-OD-FORMULIERUNGEN ZUR BEKÄMPFUNG DER WEIßEN FLIEGE**
USE OF CNI-OD FORMULATIONS FOR CONTROLLING WHITE FLY
UTILISATION DE PREPARATION DE CNI-OD POUR LUTTER CONTRE LA MOUCHE BLANCHE

(30) Priorität: 09.09.2005 DE 102005042880
(43) Veröffentlichungstag der Anmeldung: 04.06.2008
(73) Patentinhaber: Bayer CropScience AG, 40789 Monheim (DE)
(72) Erfinder: BAILO-SCHLEIERMACHER, Isidro, 51371 Leverkusen (DE); VERMEER, Ronald, 51371 Leverkusen (DE); BRUEGGEN, Kai-Uwe, 50737 Köln (DE); HUNGENBERG, Heike, 40764 Langenfeld (DE); THIELERT, Wolfgang, 51519 Odenthal (DE)
(86) Internationale Anmeldenummer: PCT/EP2006/008387
(87) Internationale Veröffentlichungsnummer: WO 2007/028517

(56) Entgegenhaltungen:
- WO-A-00/35278
- WO-A-03/000053
- I.ISHAAYA ET AL.: "Effect of the Surfactant BB5 on the Potency of Thiamethoxam against the Whitefly Bemisia Tabaci" PHYTOPARASITICA (WEB SITE POSTING 20.12.2004), Bd. 33, Nr. 1, 2005, Seiten 57-59, XP002467463
- DATABASE CA [Online] CHEMICAL ABSTRACTS SERVICE, COLUMBUS, OHIO, US; G.W.ELZEN: "Laboratory toxicity of insecticide residues to sweetpotato whitefly (Homoptera: Aleyrodidae) eggs, nymphs and adults on sweet potato, cabbage, and cotton" XP002467465 gefunden im STN-INTERNATIONAL Database accession no. 144:18138 & SOUTHWESTERN ENTOMOLOGIST, Bd. 29, Nr. 2, 2004, Seiten 147-152,
- DATABASE CA [Online] CHEMICAL ABSTRACTS SERVICE, COLUMBUS, OHIO, US; C.M.HOLGUIN: "Effect of chemical insecticide application for control of the whitefly Aleurotrachelus socialis (Homoptera: Aleyrodidae) in cassava Manohot esculenta Crantz" XP002467466 gefunden im STN-INTERNATIONAL Database accession no. 141:390390 & REVISTA COLOMBIANA DE ENTOMOLOGIA, Bd. 30, Nr. 1, 2004, Seiten 37-42,
- DATABASE CA [Online] CHEMICAL ABSTRACTS SERVICE, COLUMBUS, OHIO, US; A.R.HOROWITZ: "Comparative toxicity of foliar and systemic applications of acetamiprid and imidacloprid against the cotton whitefly, Bemisia tabaci (Hemiptera: Aleyrodidae)" XP002467467 gefunden im STN-INTERNATIONAL Database accession no. 129:312123 & BULLETIN OF ENTOMOLOGY RESEARCH, Bd. 88, Nr. 4, 1998, Seiten 437-442, in der Anmeldung erwähnt
- L.WEICHEL ET AL.: "Uptake, translocation and bioavailability of imidacloprid in several hop varieties" PEST MANAGEMENT SCIENCE, Bd. 60, 2003, Seiten 440-446, XP002467464

## Beschreibung

Innerhalb der großen Gruppe saugender Schädlinge wie z.B. Vertretern aus den Ordnungen der Heteroptera und der Homoptera stellen Weiße Fliegen (Gattung: Aleyrodina; Familie: Aleyrodidae) und hierbei Arten wie *Trialeurodes vaporariorum* und insbesondere *Bemisia tabaci* weltweit verbreitete Schädlingsarten beim Anbau vieler Getreide- und Gemüsesorten (Byrne & Bellows, Annual Review of Entomology (1991) 36, 431 - 457; Byrne et al., in: Whiteflies: their bionomics, pest status and management, Intercept, Andover, UK, 1990, S. 227 - 267) dar. Eine Bekämpfung dieses Schädlings ist deshalb von hoher wirtschaftlicher Bedeutung. Zu den dabei eingesetzten Schädlingsbekämpfungsmitteln gehören unter anderem auch solche, die Insektizide aus der Reihe der Neonicotinyle (z.B. Imidacloprid oder Acetamiprid) enthalten. Ein entsprechendes Mittel wird beispielsweise unter dem Namen Confidor ® SL 200 von der Firma Bayer CropScience (Monheim, Deutschland) vermarktet.

Während diese Mittel sehr wirksam gegen alle Lebenszyklen des Schädlings sind, wenn sie systemisch (als Gießlösung) appliziert werden, sind sie bei Spritzapplikation nur unzureichend gegen Eier und Nymphen wirksam (Horowitz et al., Bulletin of Entomological Research (1988) 88, 437-442). Der Hauptgrund dafür ist, dass sich diese auf der Unterseite der Blätter befinden und dort weitgehend unbeweglich sind. Sie werden deshalb bei der üblichen Spritzbehandlung - im Gegensatz zu den adulten Tieren - nicht von den Insektiziden erreicht und bewirken nach ihrer weiteren Entwicklung einen erneuten Befall der Pflanze mit Schädlingen.

Es wurde nun überraschend gefunden, dass bestimmte Formulierungen von Neonicotinylen bei Spritzapplikationen eine deutlich verbesserte Wirkung gegen Eier und Nymphenstadien der Weißen Fliege zeigen als die etablierten Formulierungen bei gleichartiger Anwendung. Bei diesen Formulierungen handelt es sich um Suspensionskonzentrate auf Ölbasis. Suspensionskonzentrate auf Ölbasis sind bekannt (WO 03/000053, unveröffentlichte deutsche Patentanmeldungen Nr. 102005018262.3 und 102004011007.7).

I.Ishaaya et al. (Phytoparasitica 33(1), 2005, 57-59) beschreiben die Erhöhung der Aktivität des mittels Spritzapplikation angewendeten Neonicotinyl-Insektizids Thiamethoxam gegen Nymphenstadien der Weissen Fliege *Bemisia tabaci* durch den Penetrationsförderer BB5.

Gegenstand der Erfindung ist daher die Verwendung von Suspensionskonzentraten auf Ölbasis, enthaltend mindestens ein Insektizid aus der Reihe der Neonicotinyle, zur Bekämpfung von Eiern und Nymphenstadien der Weißen Fliege durch Spritzapplikation gemäß Anspruch 1.

Formulierungen, die sich für die erfindungsgemäße Verwendung eignen, enthalten
- mindestens ein Insektizid aus der Reihe der Neonicotinyle,
- mindestens einen Penetrationsförderer,
- mindestens ein Pflanzenöl,
- mindestens ein nicht-ionischen Tensid bzw. Dispergierhilfsmittel und/oder mindestens ein anionisches Tensid bzw. Dispergierhilfsmittel und
- gegebenenfalls ein oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien.

Als Penetrationsförderer kommen im vorliegenden Zusammenhang alle diejenigen Substanzen in Betracht, die üblicherweise eingesetzt werden, um das Eindringen von agrochemischen Wirkstoffen in Pflanzen zu verbessern. Penetrations-förderer werden in diesem Zusammenhang dadurch definiert, dass sie aus der wässerigen Spritzbrühe und/oder aus dem Spritzbelag in die Kutikula der Pflanze eindringen und dadurch die Stoffbeweglichkeit (Mobilität) von Wirkstoffen in der Kutikula erhöhen können. Die in der Literatur (Baur et al., 1997, Pesticide Science 51, 131-152) beschriebene Methode kann zur Bestimmung dieser Eigenschaft eingesetzt werden.

Geeignete Formulierungen werden hergestellt, indem man
- mindestens ein Insektizid aus der Reihe Neonicotinyle,
- mindestens einen Penetrationsförderer
- mindestens ein Pflanzenöl,
- mindestens ein nicht-ionisches Tensid bzw. Dispergierhilfsmittel und/oder mindestens ein anionisches Tensid bzw. Dispergierhilfsmittel und
- gegebenenfalls einen oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien
miteinander vermischt und die entstehende Suspension gegebenenfalls anschließend mahlt.

Insektizide aus der Reihe der Neonicotinyle lassen sich durch folgende Formel (II) 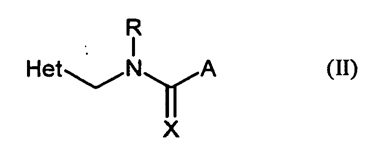 worin
- Het: für einen Heterocyclus ausgewählt aus der folgenden Gruppe von Heterocyclen steht: 2-Chlorpyrid-5-yl, 2-Methylpyrid-5-yl, 1-Oxido-3-pyridino, 2-Chlor-1-oxido-5-pyridino, 2,3-Dichlor-1-oxido-5-pyridino, Tetrahydrofuran-3-yl, 5-Methyl-tetrahydrofuran-3y1, 2-Chlorothiazol-5-yl,
- A: für N(R¹)(R²) oder S(R²) steht,
worin
- R¹: für Wasserstoff, C₁-C₆-Alkyl, Phenyl-C₁-C₄-Alkyl, C₃-C₆-Cycloalkyl, C₂-C₆-Alkenyl oder C₂-C₆-Alkinyl steht, und
- R²: für C₁-C₆-Alkyl, C₂-C₆-Alkenyl, C₂-C₆-Alkinyl, -C(=O)-CH₃ oder Benzyl steht,
- R: für C₁-C₆-Alkyl, C₂-C₆Alkenyl, C₂-C₆-Alkinyl, -C(=O)-CH₃ oder Benzyl steht oder gemeinsam mit R² für eine der folgenden Gruppen steht:
-CH₂-CH₂-, -CH₂-CH₂-CH₂-, -CH₂-O-CH₂-, -CH₂-S-CH₂-, -CH₂-NH-CH₂-, -CH₂-N-(CH₃)-CH₂- und
- X: für N-NO₂, N-CN oder CH-NO₂ steht,
beschreiben (siehe z.B. EP-A1-192 606, EP-A2-580 533, EP-A2-376 279, EP-A2-235 725).

Im Einzelnen seien folgende Verbindungen genannt, die erfindungsgemäß verwendet werden können.

Eine erfindungsgemäß bevorzugt verwendete Verbindung ist Thiamethoxam.

Thiamethoxam besitzt die Formel 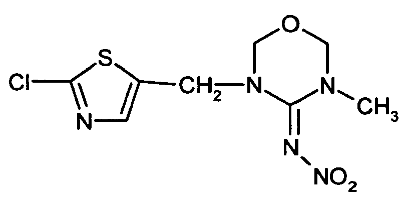 und ist bekannt aus EP A2 0 580 533.

Eine weitere erfindungsgemäß bevorzugt verwendete Verbindung ist Clothianidin.

Clothianidin besitzt die Formel 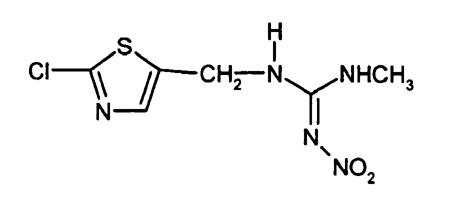 und ist bekannt aus EP A2 0 376 279.

Eine weitere erfindungsgemäß bevorzugt verwendete Verbindung ist Thiacloprid.

Thiocloprid besitzt die Formel 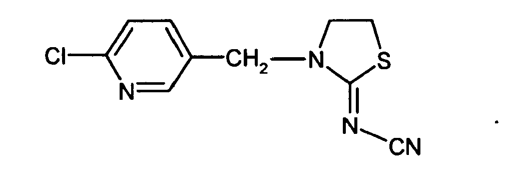 und ist bekannt aus EP A2 0 235 725.

Eine weitere erfindungsgemäß bevorzugt verwendete Verbindung ist Dinotefuran.

Dinotefuran besitzt die Formel 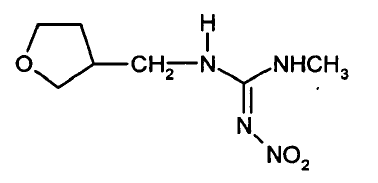 und ist bekannt aus EP A1 0 649 845.

Eine weitere erfindungsgemäß bevorzugt verwendete Verbindung ist Acetamiprid.

Acetamiprid besitzt die Formel 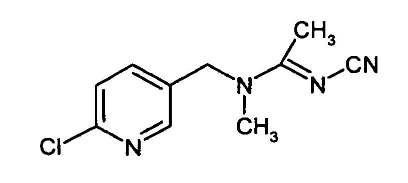 und ist bekannt aus WO A1 91/04965.

Eine weitere erfindungsgemäß bevorzugt verwendete Verbindung ist Nitenpyram.

Nitenpyram besitzt die Formel 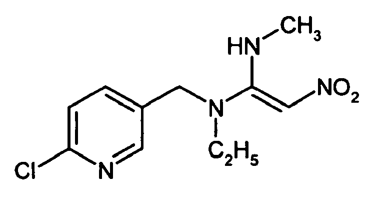 und ist bekannt aus EP A2 0 302 389.

Eine weitere erfindungsgemäß bevorzugt verwendete Verbindung ist Imidacloprid.

Imidacloprid besitzt die Formel 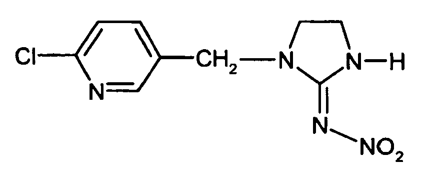 und ist bekannt aus EP 0 192 060.

Eine erfindungsgemäß besonders bevorzugt verwendete Verbindung ist Imidacloprid. Bevorzugte Penetrationsförderer sind Alkanol-alkoxylate der Formel

R-O-(-AO)ₘR' (I)

in welcher
- R: für geradkettiges oder verzweigtes Alkyl mit 4 bis 20 Kohlenstoffatomen steht,
- R': für H, Methyl, Ethyl, n-Propyl, i-Propyl, n-Butyl, i-Butyl, t-Butyl, n-Pentyl oder n-Hexyl steht,
- AO: für einen Ethylenoxid-Rest, einen Propylenoxid-Rest, einen Butylenoxid-Rest oder für Gemische aus Ethylenoxid- und Propylenoxid-Resten oder Butylenoxid-Resten steht und
- m: für Zahlen von 2 bis 30 steht.

Eine besonders bevorzugte Gruppe von Penetrationsförderern sind Alkanolalkoxylate der Formel

R-O-(-EO-)ₙ-R' (Ia)

in welcher
- R: die oben angegebene Bedeutung hat,
- R': die oben angegebene Bedeutung hat,
- EO: für -CH₂-CH₂-O- steht und
- n: für Zahlen von 2 bis 20 steht.

Eine weitere besonders bevorzugte Gruppe von Penetrationsförderern sind Alkanol-alkoxylate der Formel Ia

In welcher
- R: für verzweigtes oder unverzweigtes C₁₀-C₁₄ Alkyl steht,
- EO: für -CH₂-CH₂-O- steht und
- n: für 6, 7, 8, 9 oder 10 steht und
- R': für Wasserstoff, Methyl, Ethyl, n-Propyl, i-Propyl, n-Butyl, i-Butyl, t-Butyl, n-Pentyl oder n-Hexyl steht, insbesondere für Wasserstoff

Eine weitere besonders bevorzugte Gruppe von Penetrationsförderern sind Alkanol-alkoxylate der Formel

R-O-(-EO-)ₚ-(-PO-)_{q}-R' (Ib)

in welcher
- R: die oben angegebene Bedeutung hat,
- R': die oben angegebene Bedeutung hat,
- EO: für -CH₂-CH₂-O- steht,

- PO: für 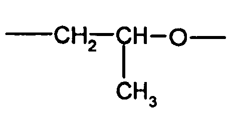 steht,
- p: für Zahlen von 1 bis 10 steht und
- q: für Zahlen von 1 bis 10 steht.

Eine weitere besonders bevorzugte Gruppe von Penetrationsförderern sind Alkanol-Alkoxylate der Formel

R-O-(-PO-)ᵣ-(EO-)ₛ-R' (Ic)

in welcher
- R: die oben angegebene Bedeutung hat,
- R': die oben angegebene Bedeutung hat,
- EO: für -CH₂-CH₂-O- steht,

- PO: für 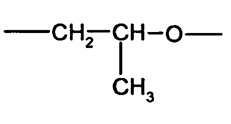 steht,
- r: für Zahlen von 1 bis 10 steht und
- s: für Zahlen von 1 bis 10 steht.

Eine weitere besonders bevorzugte Gruppe von Penetrationsförderern sind Alkanol-alkoxylate der Formel

R-O-(-EO-)ₚ-(-BO-)_{q}-R' (Id)

in welcher

R und R' die oben angegebenen Bedeutungen haben,
- EO: für CH₂-CH₂-O- steht,

- BO: für 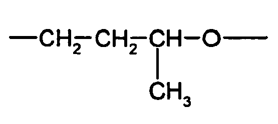 steht,
- p: für Zahlen von 1 bis 10 steht und
- q: für Zahlen von 1 bis 10 steht.

Eine weitere besonders bevorzugte Gruppe von Penetrationsförderern sind Alkanol-alkoxylate der Formel

R-O-(-BO-)ᵣ-(-EO-)ₛ-R' (Ie)

in welcher
R und R' die oben angegebenen Bedeutungen haben,
- BO: für 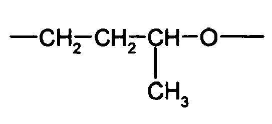
steht,
- EO: für CH₂-CH₂-O- steht,
- r: für Zahlen von 1 bis 10 steht und
- s: für Zahlen von 1 bis 10 steht.

Eine weitere besonders bevorzugte Gruppe von Penetrationsförderern sind Alkanol-Alkoxylate der Formel

CH₃-(CH₂)ₜ-CH₂-O-(-CH₂-CH₂-O-)ᵤ-R' (If)

in welcher
- R': die oben angegebene Bedeutung hat,
- t: für Zahlen von 8 bis 13 steht
und
- u: für Zahlen von 6 bis 17 steht.

In den zuvor angegebenen Formeln steht
- R: vorzugsweise für Butyl, i-Butyl, n-Pentyl, i-Pentyl, Neopentyl, n-Hexyl, i-Hexyl, n-Octyl, i-Octyl, 2-Ethyl-hexyl, Nonyl, i-Nonyl, Decyl, n-Dodecyl, i-Dodecyl, Lauryl, Myristyl, i-Tridecyl, Trimethyl-nonyl, Palmityl, Stearyl oder Eicosyl.

Als Beispiel für ein Alkanol-Alkoxylat der Formel (Ia) sei die Verbindung der Formel

R-O-(-EO-)ₙ-R' (Ia-1)

in welcher
- R: für verzweigtes C₁₂- bis C₁₄-Alkyl steht,
- n: für 6 steht (wobei die Zahl 6 einen Durchschnittswert darstellt) und
- R': für Wasserstoff steht,
genannt.

Als Beispiel für ein Alkanol-Alkoxylat der Formel (Ic) sei 2-Ethyl-hexyl-alkoxylat der Formel 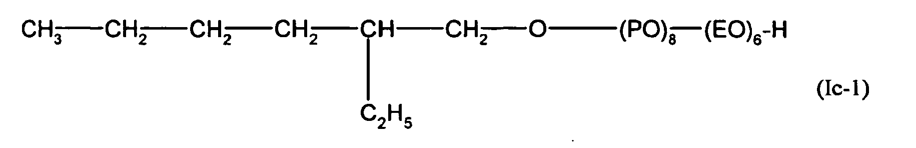 in welcher
- EO: für -CH₂-CH₂-O- steht,

- PO: für 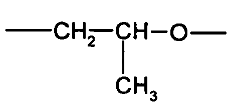 steht und
die Zahlen 8 und 6 Durchschnittswerte darstellen,
genannt.

Als Beispiel für ein Alkanol-Alkoxylat der Formel (Id) sei die Verbindung

CH₃-(CH₂)₁₀-O-(-EO-)₆-(-BO-)₂-CH₃ (Id-1)

in welcher
- EO: für CH₂-CH₂-O- steht,

- BO: für 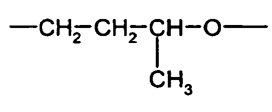 steht
genannt.

Als Beispiel für ein Alkanol-Alkoxylat der Formel (If) sei die Verbindung (If-1) genannt,

CH₃-(CH₂)_{10,5}-CH₂-O-(-CH₂-CH₂-O-)_{8,4}-R' (If-1)

in welcher 10,5 und 8,4 Durchschnittswerte darstellen.

Die Alkanol-Alkoxylate sind durch die obige Formel (I) allgemein definiert. Bei diesen Substanzen handelt es sich um Gemische von Stoffen des angegebenen Typs mit unterschiedlichen Kettenlängen. Für die Indices errechnen sich deshalb Durchschnittswerte, die auch von ganzen Zahlen abweichen können.

Die Alkanol-Alkoxylate der angegebenen Formeln sind bekannt oder lassen sich nach bekannten Methoden herstellen (vgl. WO 98-35 553, WO 00-35 278 und EP-A 0 681 865).

Als Pflanzenöle kommen alle üblicherweise in agrochemischen Mitteln einsetzbaren, aus Pflanzen gewinnbaren Öle in Frage. Beispielhaft genannt seien Sonnenblumenöl, Rapsöl, Olivenöl, Rizinusöl, Rüböl, Maiskernöl, Baumwollsaatöl und Sojabohnenöl.

Die erfindungsgemäß einsetzbaren Suspensionskonzentrate auf Ölbasis enthalten mindestens ein nicht-ionisches Tensid bzw. Dispergierhilfsmittel und/oder mindestens ein anionisches Tensid bzw. Dispergierhilfsmittel.

Als nicht-ionische Tenside bzw. Dispergierhilfsmittel kommen alle üblicherweise in agrochemischen Mitteln einsetzbaren Stoffe dieses Typs in Betracht. Vorzugsweise genannt seien Polyethylenoxid-polypropylenoxid-Blockcopolymere, Polyethylenglykolether von linearen Alkoholen, Umsetzungsprodukte von Fettsäuren mit Ethylenoxid und/oder Propylenoxid, ferner Polyvinylalkohol, Polyvinylpyrrolidon, Mischpolymerisate aus Polyvinylalkohol und Polyvinylpyrrolidon sowie Copolymerisate aus (Meth)acrylsäure und (Meth)acrylsäureestern, weiterhin Alkylethoxylate und Alkylarylethoxylate, die gegebenenfalls phosphatiert und gegebenenfalls mit Basen neutralisiert sein können, wobei Sorbitolethoxylate beispielhaft genannt seien, sowie Polyoxyalkylenamin-Derivate.

Als anionische Tenside kommen alle üblicherweise in agrochemischen Mitteln einsetzbaren Substanzen dieses Typs in Frage. Bevorzugt sind Alkalimetall- und Erdalkalimetall-Salze von Alkylsulfonsäuren oder Alkylarylsulfonsäuren.

Eine weitere bevorzugte Gruppe von anionischen Tensiden bzw. Dispergierhilfsmitteln sind in Pflanzenöl wenig lösliche Salze von Polystyrolsulfonsäuren, Salze von Polyvinylsulfonsäuren, Salze von Naphthalinsulfonsäure-Formaldehyd-Kondensationsprodukten, Salze von Kondensationsprodukten aus Naphthalinsulfonsäure, Phenolsulfonsäure und Formaldehyd sowie Salze von Ligninsulfonsäure.

Als Zusatzstoffe, die in den erfindungsgemäß einsetzbaren Formulierungen enthalten sein können, kommen Emulgatoren, schaumhemmende Mittel, Konservierungsmittel, Antioxydantien, Farbstoffe und inerte Füllmaterialien in Betracht.

Bevorzugte Emulgatoren sind ethoxylierte Nonylphenole, Umsetzungsprodukte von Alkylphenolen mit Ethylenoxid und/oder Propylenoxid, ethoxylierte Arylalkylphenole, weiterhin ethoxylierte und propoxylierte Arylalkylphenole, sowie sulfatierte oder phosphatierte Arylalkylethoxylate bzw. -ethoxy-propoxylate, wobei Sorbitan-Derivate, wie Polyethylenoxid-Sorbitan-Fettsäureester und Sorbitan-Fettsäureester, beispielhaft genannt seien.

Als schaumhemmende Stoffe kommen alle üblicherweise für diesen Zweck in agrochemischen Mitteln einsetzbaren Substanzen in Betracht. Bevorzugt sind Silikonöle und Magnesiumstearat.

Als Konservierungsmittel kommen alle üblicherweise für diesen Zweck in agrochemischen Mitteln dieses Typs einsetzbaren Substanzen in Frage. Als Beispiele genannt seien Preventol® (Fa. Bayer AG) und Proxel®.

Als Antioxydantien kommen alle üblicherweise für diesen Zweck in agrochemischen Mitteln einsetzbaren Substanzen in Betracht. Bevorzugt ist Butylhydroxytoluol und / oder Zitronensäure.

Als Farbstoffe kommen alle üblicherweise für diesen Zweck in agrochemischen Mitteln einsetzbaren Substanzen in Frage. Beispielhaft genannt seien Titandioxid, Farbruß, Zinkoxid und Blaupigmente sowie Permanentrot FGR.

Als inerte Füllmaterialien kommen alle üblicherweise für diesen Zweck in agrochemischen Mitteln einsetzbaren Substanzen in Betracht, die nicht als Verdickungsmittel fungieren. Bevorzugt sind anorganische Partikel, wie Carbonate, Silikate und Oxide, sowie auch organische Substanzen, wie Harnstoff-Formaldehyd-Kondensate. Beispielhaft erwähnt seien Kaolin, Rutil, Siliciumdioxid, sogenannte hochdisperse Kieselsäure, Kieselgele, sowie natürliche und synthetische Silikate, außerdem Talkum.

Der erfindungsgemäß einsetzbaren Formulierungen können in einer besondereren Ausführungsform noch mindestens einen weiteren Wirkstoff (Insektizide, Lockstoffe, Sterilantien, Bakterizide, Akarizide, Nematizide, Fungizide, wachstumsregulierenden Stoffe oder Herbizide) enthalten. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Besonders günstige Mischpartner sind z.B. die folgenden:

### Fungizide:

Inhibitoren der Nucleinsäure Synthese
   Benalaxyl, Benalaxyl-M, Bupirimat, Chiralaxyl, Clozylacon, Dimethirimol, Ethirimol, Furalaxyl, Hymexazol, Metalaxyl, Metalaxyl-M, Ofurace, Oxadixyl, Oxolinsäure
Inhibitoren der Mitose und Zellteilung
   Benomyl, Carbendazim, Diethofencarb, Fuberidazole, Pencycuron, Thiabendazol, Thiophanat-methyl, Zoxamid
Inhibitoren der Atmungskette Komplex I
   Diflumetorim
Inhibitoren der Atmungskette Komplex II
   Boscalid, Carboxin, Fenfuram, Flutolanil, Furametpyr, Mepronil, Oxycarboxin, Penthiopyrad, Thifluzamid
Inhibitoren der Atmungskette Komplex III
   Azoxystrobin, Cyazofamid, Dimoxystrobin, Enestrobin, Famoxadon, Fenamidon, Fluoxastrobin, Kresoximmethyl, Metominostrobin, Orysastrobin, Pyraclostrobin, Picoxystrobin
Entkoppler
   Dinocap, Fluazinam
Inhibitoren der ATP Produktion
   Fentinacetat, Fentinchlorid, Fentinhydroxid, Silthiofam
Inhibitoren der Aminosäure- und Proteinbiosynthese
   Andoprim, Blasticidin-S, Cyprodinil, Kasugamycin, Kasugamycinhydrochlorid Hydrat, Mepanipyrim, Pyrimethanil
Inhibitoren der Signal-Transduktion
   Fenpiclonil, Fludioxonil, Quinoxyfen
Inhibitoren der Fett- und Membran Synthese
   Chlozolinat, Iprodion, Procymidon, Vinclozolin
   Ampropylfos, Kalium-Ampropylfos, Edifenphos, Iprobenfos (IBP), Isoprothiolan, Pyrazophos
   Tolclofos-methyl, Biphenyl
   Iodocarb, Propamocarb, Propamocarb hydrochlorid
Inhibitoren der Ergosterol Biosynthese
   Fenhexamid,
   Azaconazol, Bitertanol, Bromuconazol, Cyproconazol, Diclobutrazol, Difenoconazol, Diniconazol, Diniconazol-M, Epoxiconazol, Etaconazol, Fenbuconazol, Fluquinconazol, Flusilazol, Flutriafol, Furconazol, Furconazol-cis, Hexaconazol, Imibenconazol, Ipconazol, Metconazol, Myclobutanil, Paclobutrazol, Penconazol, Propiconazol, Prothioconazol, Simeconazol, Tebuconazol, Tetraconazol, Triadimefon, Triadimenol, Triticonazol, Uniconazol, Voriconazol, Imazalil, Imazalilsulfat, Oxpoconazol, Fenarimol, Flurprimidol, Nuarimol, Pyrifenox, Triforin, Pefurazoat, Prochloraz, Triflumizol, Viniconazol,
   Aldimorph, Dodemorph, Dodemorphacetat, Fenpropimorph, Tridemorph, Fenpropidin, Spiroxamin,
   Naftifin, Pyributicarb, Terbinafin
Inhibitoren der Zellwand Synthese
   Benthiavalicarb, Bialaphos, Dimethomorph, Flumorph, Iprovalicarb, Polyoxins, Polyoxorim, Validamycin A
Inhibitoren der Melanin Biosynthese
   Capropamid, Diclocymet, Fenoxanil, Phtalid, Pyroquilon, Tricyclazol
Resistenzinduktion
   Acibenzolar-S-methyl, Probenazol, Tiadinil
Multisite
   Captafol, Captan, Chlorothalonil, Kupfersalze wie: Kupferhydroxid, Kupfemaphthenat, Kupferoxychlorid, Kupfersulfat, Kupferoxid, Oxin-Kupfer und Bordeaux Mischung, Dichlofluanid, Dithianon, Dodin, Dodin freie Base, Ferbam, Fluorofolpet, Guazatin, Guazatinacetat, Iminoctadin, Iminoctadinalbesilat, Iminoctadintriacetat, Mankupfer, Mancozeb, Maneb, Metiram, Metiram Zink, Propineb, Schwefel und Schwefelpräparate enthaltend Calciumpolysulphid, Thiram, Tolylfluanid, Zineb, Ziram
Unbekannter Mechanismus
   Amibromdol, Benthiazol, Bethoxazin, Capsimycin, Carvon, Chinomethionat, Chloropicrin, Cufraneb, Cyflufenamid, Cymoxanil, Dazomet, Debacarb, Diclomezine, Dichlorophen, Dicloran, Difenzoquat, Difenzoquat Methylsulphat, Diphenylamin, Ethaboxam, Ferimzon, flumetover, Flusulfamid, Fluopicolid, Fluoroimid, Hexachlorobenzol, 8-Hydroxychinolinsulfat, Irumamycin, Methasulphocarb, Metrafenon, Methyl Isothiocyanat, Mildiomycin, Natamycin, Nickel dimethyldithiocarbamat, Nitrothal-isopropyl, Octhilinon, Oxamocarb, Oxyfenthiin, Pentachlorophenol und Salze, 2-Phenylphenol und Salze, Piperalin, Propanosin -Natrium, Proquinazid, Pyrrolnitrin, Quintozen, Tecloftalam, Tecnazen, Triazoxid, Trichlamid, Zarilamid und 2,3,5,6-Tetrachlor-4-(methylsulfonyl)-pyridin, N-(4-Chlor-2-nitrophenyl)-N-ethyl-4-methyl-benzenesulfonamid, 2-Amino-4-methyl-N-phenyl-5-thiazolecarboxamid, 2-Chlor-N-(2,3-dihydro-1,1,3-trimethyl-1H-inden-4-yl)-3-pyridincarboxamid, 3-[5-(4-Chlorphenyl)-2,3-dimethylisoxazolidin-3-yl]pyridin, cis-1-(4-Chlorphenyl)-2-(1H-1,2,4-triazol-1-yl)-cycloheptanol, 2,4-Dihydro-5-methoxy-2-methyl-4-[[[[1-[3-(trifluoromethyl)-phenyl]-ethyliden]-amino]-oxy]-methyl]-phenyl]-3H-1,2,3-triazol-3-on (185336-79-2), Methyl 1-(2,3-dihydro-2,2-dimethyl-1H-inden-1-yl)-1H-imidazole-5-arboxylar, 3,4,5-Trichlor-2,6-pyridindicarbonitril, Methyl 2-[[[cyclopropyl[(4-methoxyphenyl) imino]methyl]thio]methyl]-.alpha.-(methoxymethylen)- benzacetat, 4-Chlor-alpha-propinyloxy-N-[2-[3-methoxy-4-(2-propinyloxy)phenyl]ethyl]-benzacetamide, (2S)-N-[2-[4-[[3-(4-chlorophenyl)-2-propinyl]oxy]-3-methoxyphenyl]ethyl]- 3-methyl-2-[(methylsulfonyl)amino]-butanamid, 5-Chlor-7-(4-methylpiperidin-1-yl)-6-(2,4,6-trifluorophenyl)[1,2,4]triazolo[1,5-a]pyrimidin, 5-Chlor-6-(2,4,6-trifluorophenyl)-N-[(1R)-1,2,2-trimethylpropyl][1,2,4]triazolo[1,5-a]pyrimidin-7-amin, 5-Chlor-N-[(1R)-1,2-dimethylpropyl]-6-(2,4,6-trifluorophenyl) [1,2,4]triazolo[1,5-a]pyrimidin-7-amine,N-[1-(5-Brom-3-chloropyridin-2-yl)ethyl]-2,4-dichloronicotinamid, N-(5-Brom-3-chlorpyridin-2-yl)methyl-2,4-dichlornicotinamid, 2-Butoxy-6-iod-3-propyl-benzopyranon-4-on, N-{(Z)-[(cyclopropylmethoxy) imino][6-(difluormethoxy)-2,3-difluorphenyl]methyl}-2-benzacetamid, N-(3-Ethyl-3,5,5-trimethyl-cyclohexyl)-3-formylamino-2-hydroxy-benzamid, 2-[[[[1-[3(1Fluor-2-phenylethyl)oxy] phenyl]ethyliden]amino]oxy]methyl]-alpha-(methoxyimino)-N-methyl-alphaE-benzacetamid, N-{2-[3-Chlor-5-(trifluormethyl)pyridin-2-yl]ethyl}-2-(trifluoromethyl)benzamid, N-(3',4'-dichlor-5-fluorbiphenyl-2-yl)-3-(difluormethyl)-1-methyl-1H-pyrazol-4-carboxamid, N-(6-Methoxy-3-pyridinyl)-cyclopropan carboxamid, 1-[(4-Methoxyphenoxy)methyl]-2,2-dimethylpropyl-1H-imidazol-1- carbonsäure, O-[1-[(4-Methoxyphenoxy)methyl]-2,2-dimethylpropyl]-1H-imidazol- 1- carbothioic acid, 2-(2-{[6-(3-Chlor-2-methylphenoxy)-5-fluorpyrimidin-4-yl]oxy}phenyl)-2-(methoxyimino)-N-methylacetamid

### Bakterizide:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

### Insektizide / Akarizide / Nematizide:

Acetylcholinesterase (AChE) Inhibitoren
   Carbamate,
      zum Beispiel Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanate, Furathiocarb, Isoprocarb, Metam-sodium, Methiocarb, Methomyl, Metolcarb, Oxamyl, Pirimicarb, Promecarb, Propoxur, Thiodicarb, Thiofanox, Trimethacarb, XMC, Xylylcarb, Triazamate
   Organophosphate,
      zum Beispiel Acephate, Azamethiphos, Azinphos (-methyl, -ethyl), Bromophos-ethyl, Bromfenvinfos (-methyl), Butathiofos, Cadusafos, Carbophenothion, Chlorethoxyfos, Chlorfenvinphos, Chlormephos, Chlorpyrifos (-methyl/-ethyl), Coumaphos, Cyanofenphos, Cyanophos, Chlorfenvinphos, Demeton-S-methyl, Demeton-S-methylsulphon, Dialifos, Diazinon, Dichlofenthion, Dichlorvos/DDVP, Dicrotophos, Dimethoate, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazate, Heptenophos, Iodofenphos, Iprobenfos, Isazofos, Isofenphos, Isopropyl O-salicylate, Isoxathion, Malathion, Mecarbam, Methacrifos, Methamidophos, Methidathion, Mevinphos, Monocrotophos, Naled, Omethoate, Oxydemeton-methyl, Parathion (-methyl/-ethyl), Phenthoate, Phorate, Phosalone, Phosmet, Phosphamidon, Phosphocarb, Phoxim, Pirimiphos (-methyl/-ethyl), Profenofos, Propaphos, Propetamphos, Prothiofos, Prothoate, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion
Natrium-Kanal-Modulatoren / Spannungsabhängige Natrium-Kanal-Blocker
   Pyrethroide,
      zum Beispiel Acrinathrin, Allethrin (d-cis-trans, d-trans), Beta-Cyfluthrin, Bifenthrin, Bioallethrin, Bioallethrin-S-cyclopentyl-isomer, Bioethanomethrin, Biopermethrin, Bioresmethrin, Chlovaporthrin, Cis-Cypermethrin, Cis-Resmethrin, Cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-isomer), Esfenvalerate, Etofenprox, Fenfluthrin, Fenpropathrin, Fenpyrithrin, Fenvalerate, Flubrocythrinate, Flucythrinate, Flufenprox, Flumethrin, Fluvalinate, Fubfenprox, Gamma-Cyhalothrin, Imiprothrin, Kadethrin, Lambda-Cyhalothrin, Metofluthrin, Permethrin (cis-, trans-), Phenothrin (1R-trans isomer), Prallethrin, Profluthrin, Protrifenbute, Pyresmethrin, Resmethrin, RU 15525, Silafluofen, Tau-Fluvalinate, Tefluthrin, Terallethrin, Tetramethrin (-1R- isomer), Tralomethrin, Transfluthrin, ZXI 8901, Pyrethrins (pyrethrum)
   DDT
   Oxadiazine,
      zum Beispiel Indoxacarb
Acetylcholin-Rezeptor-Agonisten/-Antagonisten
   Chloronicotinyle,
   zum Beispiel Acetamiprid, Clothianidin, Dinotefuran, Imidacloprid, Nitenpyram, Nithiazine, Thiacloprid, Thiamethoxam
   Nicotine, Bensultap, Cartap
Acetylcholin-Rezeptor-Modulatoren
   Spinosyne,
   zum Beispiel Spinosad
GABA-gesteuerte Chlorid-Kanal-Antagonisten
   Organochlorine,
      zum Beispiel Camphechlor, Chlordane, Endosulfan, Gamma-HCH, HCH, Heptachlor, Lindane, Methoxychlor
   Fiprole,
      zum Beispiel Acetoprole, Ethiprole, Fipronil, Pyrafluprole, Pyriprole, Vaniliprole
Chlorid-Kanal-Aktivatoren
   Mectine,
      zum Beispiel Avermectin, Emamectin, Emamectin-benzoate, Ivermectin, Milbemycin
Juvenilhormon-Mimetika,
   zum Beispiel Diofenolan, Epofenonane, Fenoxycarb, Hydroprene, Kinoprene, Methoprene, Pyriproxifen, Triprene
Ecdysonagonisten/disruptoren
   Diacylhydrazine,
   zum Beispiel Chromafenozide, Halofenozide, Methoxyfenozide, Tebufenozide
Inhibitoren der Chitinbiosynthese
   Benzoylharnstoffe,
      zum Beispiel Bistrifluron, Chlofluazuron, Diflubenzuron, Fluazuron, Flucycloxuron, Flufenoxuron, Hexaflumuron, Lufenuron, Novaluron, Noviflumuron, Penfluron, Teflubenzuron, Triflumuron
   Buprofezin
   Cyromazine
Inhibitoren der oxidativen Phosphorylierung, ATP-Disruptoren
   Diafenthiuron
   Organozinnverbindungen,
      zum Beispiel Azocyclotin, Cyhexatin, Fenbutatin-oxide
Entkoppler der oxidativen Phoshorylierung durch Unterbrechung des H-Protongradienten
   Pyrrole,
      zum Beispiel Chlorfenapyr
   Dinitrophenole,
      zum Beispiel Binapacyrl, Dinobuton, Dinocap, DNOC
Seite-1-Elektronentransportinhibitoren
   METI's,
      zum Beispiel Fenazaquin, Fenpyroximate, Pyrimidifen, Pyridaben, Tebufenpyrad, Tolfenpyrad
   Hydramethylnon
   Dicofol
Seite-II-Elektronentransportinhibitoren
   Rotenone
Seite-III-Elektronentransportinhibitoren
   Acequinocyl, Fluacrypyrim
Mikrobielle Disruptoren der Insektendarmmembran
   Bacillus thuringiensis-Stämme
Inhibitoren der Fettsynthese
   Tetronsäuren,
      zum Beispiel Spirodiclofen, Spiromesifen
   Tetramsäuren,
      zum Beispiel Spirotetramat (CAS-Reg.-No.: 203313-25-1) und 3-(2,5-Dimethylphenyl)-8-methoxy-2-oxo-1-azaspiro[4.5]dec-3-en-4-yl ethyl carbonate (alias: Carbonic acid, 3-(2,5-dimethylphenyl)-8-methoxy-2-oxo-1-azaspiro[4.5]dec-3-en-4-yl ethyl ester, CAS-Reg.-No.: 382608-10-8)
   Carboxamide,
      zum Beispiel Flonicamid
   Oktopaminerge Agonisten,
      zum Beispiel Amitraz
Inhibitoren der Magnesium-stimulierten ATPase,
   Propargite
   Benzoesäuredicarboxamide,
   zum Beispiel Flubendiamide
   Nereistoxin-Analoge,
   zum Beispiel Thiocyclam hydrogen oxalate, Thiosultap-sodium
Biologika, Hormone oder Pheromone
   Azadirachtin, Bacillus spec., Beauveria spec., Codlemone, Metarrhizium spec., Paecilomyces spec., Thuringiensin, Verticillium spec.
Wirkstoffe mit unbekannten oder nicht spezifischen Wirkmechanismen
   Begasungsmittel,
      zum Beispiel Aluminium phosphide, Methyl bromide, Sulfuryl fluoride
   Fraßhemmer,
      zum Beispiel Cryolite, Flonicamid, Pymetrozine
   Milbenwachstumsinhibitoren,
      zum Beispiel Clofentezine, Etoxazole, Hexythiazox
   Amidoflumet, Benclothiaz, Benzoximate, Bifenazate, Bromopropylate, Buprofezin, Chinomethionat, Chlordimeform, Chlorobenzilate, Chloropicrin, Clothiazoben, Cycloprene, Cyflumetofen, Dicyclanil, Fenoxacrim, Fentrifanil, Flubenzimine, Flufenerim, Flutenzin, Gossyplure, Hydramethylnone, Japonilure, Metoxadiazone, Petroleum, Piperonyl butoxide, Potassium oleate, Pyridalyl, Sulfluramid, Tetradifon, Tetrasul, Triarathene,Verbutin

Der Gehalt an den einzelnen Komponenten kann in den erfindungsgemäß einsetzbaren Suspensionskonzentraten auf Ölbasis innerhalb eines größeren Bereiches variiert werden. So liegen die Konzentrationen
- an agrochemischen Wirkstoffen im allgemeinen zwischen 5 und 40 Gew.-%, vorzugsweise zwischen 10 und 37,5 Gew.-%, ganz besonders bevorzugt zwischen 20 und 35 Gew.-%,
- an Penetrationsförderer im allgemeinen zwischen 5 und 55 Gew.-%, vorzugsweise zwischen 15 und 40 Gew.-%,
- an Pflanzenöl im allgemeinen zwischen 15 und 55 Gew.-%, vorzugsweise zwischen 20 und 50 Gew.-%,
- an Tensiden bzw. Dispergierhilfsmitteln im allgemeinen zwischen 2,5 und 30 Gew.-%, vorzugsweise zwischen 5,0 und 25 Gew.-% und
- an Zusatzstoffen im allgemeinen zwischen 0 und 25 Gew.-%, vorzugsweise zwischen 0 und 20 Gew.-%.

Die Herstellung der erfindungsgemäßen Suspensionskonzentrate auf Ölbasis erfolgt in der Weise, dass man die Komponenten in den jeweils gewünschten Verhältnissen miteinander vermischt. Die Reihenfolge, in der die Bestandteile miteinander vermengt werden, ist beliebig. Zweckmäßigerweise setzt man die festen Komponenten in feingemahlenem Zustand ein. Es ist aber auch möglich, die nach dem Vermengen der Bestandteile entstehende Suspension zunächst einer Grob- und dann einer Feinmahlung zu unterziehen, so dass die mittlere Teilchengröße unterhalb von 20 µm liegt. Bevorzugt sind Suspensionskonzentrate, in denen die festen Partikel eine mittlere Teilchengröße zwischen 1 und 10 µm aufweisen.

Die Temperaturen können bei der Durchführung des erfindungsgemäßen Verfahrens in einem bestimmten Bereich variiert werden. Man arbeitet im allgemeinen bei Temperaturen zwischen 10°C und 60°C, vorzugsweise zwischen 15°C und 40°C.

Zur Durchführung des erfindungsgemäßen Verfahrens kommen übliche Misch- und Mahlgeräte in Betracht, die zur Herstellung von agrochemischen Formulierungen eingesetzt werden.

Bei den erfindungsgemäßen Suspensionskonzentraten auf Ölbasis handelt es sich um Formulierungen, die auch nach längerer Lagerung bei erhöhten Temperaturen oder in der Kälte stabil bleiben, da kein Kristallwachstum beobachtet wird. Sie lassen sich durch Verdünnen mit Wasser in homogene Spritzflüssigkeiten überführen. Die Anwendung dieser Spritzflüssigkeiten erfolgt erfindungsgemäß durch Verspritzen.

Die Aufwandmenge an den erfindungsgemäßen Suspensionskonzentraten auf Ölbasis kann innerhalb eines größeren Bereiches variiert werden. Sie richtet sich nach den jeweiligen agrochemischen Wirkstoffen und nach deren Gehalt in den Formulierungen.

Mit Hilfe der erfindungsgemäßen Suspensionskonzentrate auf Ölbasis lassen sich agrochemische Wirkstoffe, insbesondere aus der Reihe der Neonicotinyle, in besonders vorteilhafter Weise auf Pflanzen und/oder deren Lebensraum ausbringen.

Mit den erfindungsgemäßen Formulierungen können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Hervorgehoben sei hierbei die besonders vorteilhafte Wirkung der erfindungsgemäßen Mittel hinsichtlich der Anwendung in Getreidepflanzen, wie z.B. Weizen, Hafer, Gerste, Dinkel, Triticale und Roggen, aber auch in Mais, Hirse, Reis, Zuckerrohr, Soja, Sonnenblumen, Kartoffeln, Baumwolle, Raps, Canola, Tabak, Zuckerrüben Futterrüben, Spargel, Hopfen sowie Obstpflanzen (umfassend Kernobst wie z.B. Äpfel und Birnen, Steinobst wie z.B. Pfirsiche, Nektarinen, Kirschen, Pflaumen und Aprikosen, Zitrusfrüchte wie z.B. Orangen, Grapefruits, Limetten, Zitronen, Kumquats, Mandarinen und Satsumas, Nüsse wie z.B. Pistazien, Mandeln, Walnüsse und Pecannüsse, tropische Früchte wie z.B. Mango, Papaya, Ananas, Datteln und Bananen, und Weintrauben) und Gemüse (umfassend Blattgemüse, wie z.B. Endivien, Feldsalat, Knollenfenchel, Kopf- und Pflücksalate, Mangold, Spinat und Zichoriensalat, Kohlgemüse wie z.B. Blumenkohl, Brokkoli, Chinakohl, Grünkohl (Winter- oder Krauskohl), Kohlrabi, Rosenkohl, Rotkohl, Weißkohl und Wirsing, Fruchtgemüse wie z.B. Auberginen, Gurken, Paprika, Speisekürbisse, Tomaten, Zucchini und Zuckermais, Wurzelgemüse wie z.B. Knollensellerie, Mairüben, Möhren, Gelbe Rüben, Radieschen, Rettich, Rote Rüben, Schwarzwurzeln und Stangensellerie, Hülsenfrüchte wie z.B. Erbsen und Bohnen sowie Zwiebelgemüse wie z.B. Lauch und Speisezwiebeln).

Die erfindungsgemäße Behandlung der Pflanzen und Pflanzenteile mit den erfindungsgemäßen Formulierungen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die enthaltenen agrochemischen Wirkstoffe entfalten dabei eine bessere biologische Wirksamkeit gegen alle Stadien der Weißen Fliege als bei Applikation in Form der entsprechenden herkömmlichen Formulierungen.

Die Erfindung wird durch die folgenden Beispiele veranschaulicht. Die Beispiele sind nicht beschränkend zu verstehen.

### Herstellungsbeispiele

### Beispiel 1

Zur Herstellung eines erfindungsgemäßen Suspensionskonzentrates werden
183 g Imidacloprid,
100 g Arlatone T der Firma Uniqema
25 g Atlox MBA 13/20 der Firma Uniqema
42 g Atlox 4838 B der Firma Uniqema
20 g Borresperse NA der Firma Borregaard LignoTech
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ia-1, und
427,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 2

Zur Herstellung eines erfindungsgemäßen Suspensionskonzentrates werden
196 g Imidacloprid
100 g Arlatone T der Firma Uniqema
50 g Atlox PS 2 der Firma Uniqema
50 g Borresperse NA der Firma Borregaard LignoTech
1 g Antifoam 1500 der Firma DowCorning
2 g Butylhydroxytoluol der Firma Bayer
unter Rühren bei Raumtemperatur in ein Gemisch aus
200 g Alkanol-Alkoxylat der Formel Ia-1, und
401 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 3

Zur Herstellung eines erfindungsgemäßen Suspensionskonzentrates werden
196 g Imidacloprid
100 g Arlatone T der Firma Uniqema
50 g Atlas G 1281 der Firma Uniqema
50 g Borresperse NA der Firma Borregaard LignoTech
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ia-1, und
401,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 4

Zur Herstellung eines erfindungsgemäßen Suspensionskonzentrates werden
320 g Imidacloprid
100 g Arlatone T der Firma Uniqema
50 g Atlox PS 2 der Firma Uniqema
30 g Borresperse NA der Firma Borregaard LignoTech
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ia-1, und
297,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 5

Zur Herstellung eines erfindungsgemäßen Suspensionskonzentrates werden
231 g Imidacloprid
100 g Arlatone T der Firma Uniqema
50 g Atlox PS 2 der Firma Uniqema
20 g Borresperse NA der Firma Borregaard LignoTech
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ia-1, und
396,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 6

Zur Herstellung eines erfindungsgemäßen Suspensionskonzentrates werden
196 g Imidacloprid
100 g Arlatone T der Firma Uniqema
50 g Atlox 4894 der Firma Uniqema
5 g Morwet D 425 der Firma Akzo Nobel
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ic-1, und
446,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 7

Zur Herstellung eines erfindungsgemäßen Suspensionskonzentrates werden
196 g Imidacloprid
100 g Arlatone T der Firma Uniqema
100 g Atlox 3467 der Firma Uniqema
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Ic-1, und
401,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Beispiel 8

Zur Herstellung eines erfindungsgemäßen Suspensionskonzentrates werden
196 g Imidacloprid
100 g Arlatone T der Firma Uniqema
90 g Atlox 4894 der Firma Uniqema
10 g Borresperse NA der Firma Borregaard LignoTech
0,5 g Silicon Antischaummittel 1132 der Firma Wacker
2 g Butylhydroxytoluol der Firma Bayer
unter Rühren bei Raumtemperatur in ein Gemisch aus
200 g Alkanol-Alkoxylat der Formel Id-1, und
401,5 g Sonnenblumenöl
gegeben. Nach beendeter Zugabe wird noch 10 Minuten bei Raumtemperatur nachgerührt. Die dabei entstehende homogene Suspension wird zunächst einer Grob- und dann eine Feinmahlung unterworfen, so dass eine Suspension erhalten wird, in der 90 % der Feststoffpartikel eine Teilchengröße unter 6 µm aufweisen.

### Anwendungsbeispiele

Baumwollpflanzen (*Gossypium hirsutum*), die von Eiern und Larven der Weißen Fliege (*Bemisia tabaci*) befallen sind, werden durch Sprühen mit einer Zusammensetzung der gewünschten Zusammensetzung und Konzentration behandelt.

Nach der gewünschten Zeit wird die Abtötung in % bestimmt. Dabei bedeutet 100 %, dass alle Tiere abgetötet wurden; 0 % bedeutet, dass keine Tiere abgetötet wurden.

| Zusammensetzung | % Abtötung nach der angegebenen Zeit bei der angegebenen Wirkstoffkonzentration | | | |
|---|---|---|---|---|
| | Eier / 14d | L1 / 10d | L3 / 13d | Adulte / 6d |
| Stand der Technik Confidor® SL200 | 60 150 g/ha | 0 12,5 g/ha | 0 5 g/ha | 60 5 g/ha |
| Erfindungsgemäß Confidor® OD200 | 100 150 g/ha | 75 12,5 g/ha | 90 5 g/ha | 100 5 g/ha |

## Patentansprüche

1. Verwendung von Suspensionskonzentraten auf Ölbasis, enthaltend mindestens ein Insektizid aus der Reihe der Neonicotinide, zur Bekämpfung von Eiern und Nymphenstadien der Weißen Fliege durch Spritzapplikation, wobei das Suspensionkonzentrat
- mindestens ein Insektizid aus der Reihe der Neonicotinyle,
- mindestens einen Penetrationsförderer
- mindestens ein Pflanzenöl,
- mindestens ein nicht-ionischen Tensid bzw. Dispergierhilfsmittel und/oder mindestens ein anionisches Tensid bzw. Dispergierhilfsmittel und
- gegebenenfalls ein oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien
enthält.

2. Verwendung gemäß Anspruch 1, **dadurch gekennzeichnet, dass** das Suspensionkonzentrat
- 5 bis 40 Gew.-% mindestens eines Insektizids aus der Reihe der Neonicotinyle,
- 5 bis 55 Gew.-% mindestens eines Penetrationsförderers
- 15 bis 55 Gew.-% mindestens eines Pflanzenöl,
- 2,5 bis 30 Gew.-% mindestens eines nicht-ionischen Tensid bzw. Dispergierhilfsmittel und/oder mindestens eines anionischen Tensid bzw. Dispergierhilfsmittel und
- bis zu 25 Gew.-% gegebenenfalls eines oder mehrerer Zusatzstoffe aus den Gruppen der Emulgiermittel, der schaumhemmenden Mittel, der Konservierungsmittel, der Antioxydantien, der Farbstoffe und/oder der inerten Füllmaterialien
enthält.

3. Verfahren zur Bekämpfung von Eiern und Nymphenstadien der Weißen Fliege, **dadurch gekennzeichnet, dass** eine wirksame Menge mindestens eines Insektizids aus der Reihe der Neonicotinyle durch Versprühen eines Suspensionskonzentrats auf Ölbasis, auf Pflanzen ausgebracht wird, wobei das Suspensionskonzentrat
- mindestens ein Insektizid aus der Reihe der Neonicotinyle,
- mindestens einen Penetrationsförderer
- mindestens ein Pflanzenöl,
- mindestens ein nicht-ionischen Tensid bzw. Dispergierhilfsmittel und/oder mindestens ein anionisches Tensid bzw. Dispergierhilfsmittel und
- gegebenenfalls ein oder mehrere Zusatzstoffe aus den Gruppen der Emulgiermittel, der schaumhemmenden Mittel, der Konservierungsmittel, der Antioxydantien, der Farbstoffe und/oder der inerten Füllmaterialien
enthält.

## Claims

1. Use of oil-based suspension concentrates containing at least one insecticide from the neonicotinide series for controlling eggs and nymphal stages of whitefly by means of spray application, wherein the suspension concentrate contains
- at least one insecticide from the neonicotinyl series,
- at least one penetrant,
- at least one vegetable oil,
- at least one nonionic surfactant or dispersant and/or at least one anionic surfactant or dispersant, and
- if appropriate one or more additives from the group of the emulsifiers, the antifoam agents, the preservatives, the antioxidants, the colourants and/or the inert fillers.

2. Use according to Claim 1, **characterized in that** the suspension concentrate contains
- 5 to 40% by weight of at least one insecticide from the neonicotinyl series,
- 5 to 55% by weight of at least one penetrant,
- 15 to 55% by weight of at least one vegetable oil,
- 2.5 to 30% by weight of at least one nonionic surfactant or dispersant and/or at least one anionic surfactant or dispersant, and
- if appropriate up to 25% by weight of one or more additives from the group of the emulsifiers, the antifoam agents, the preservatives, the antioxidants, the colourants and/or the inert fillers.

3. Method of controlling eggs and nymphal stages of whitefly, **characterized in that** an effective amount of at least one insecticide from the neonicotinyl series is applied to plants by spraying an oil-based suspension concentrate, wherein the suspension concentrate contains
- at least one insecticide from the neonicotinyl series,
- at least one penetrant,
- at least one vegetable oil,
- at least one nonionic surfactant or dispersant and/or at least one anionic surfactant or dispersant, and
- if appropriate one or more additives from the group of the emulsifiers, the antifoam agents, the preservatives, the antioxidants, the colourants and/or the inert fillers.

## Revendications

1. Utilisation de concentrés en suspension à base d'huile contenant au moins un insecticide de la série des néonicotinoïdes pour combattre les oeufs et les stades de nymphes des mouches blanches par application par pulvérisation, dans laquelle le concentré en suspension contient
- au moins un insecticide de la série des néonicotinyles,
- au moins un promoteur de pénétration,
- au moins une huile végétale,
- au moins un tensioactif non ionique respectivement auxiliaire de dispersion et/ou au moins un tensioactif anionique respectivement auxiliaire de dispersion, et
- éventuellement un ou plusieurs additifs des groupes des agents émulsionnants, des agents antimousses, des agents de conservation, des antioxydants, des colorants et/ou des matières de charges inertes.

2. Utilisation selon la revendication 1, **caractérisée en ce que** le concentré en suspension contient :
- de 5 à 40 % en poids d'au moins un insecticide de la série des néonicotinyles,
- de 5 à 55 % en poids d'au moins un promoteur de pénétration,
- de 15 à 55 % en poids d'au moins une huile végétale,
- de 2,5 à 30 % en poids d'au moins un tensioactif non ionique respectivement auxiliaire de dispersion et/ou au moins un tensioactif anionique respectivement auxiliaire de dispersion, et
- jusqu'à 25 % en poids, éventuellement d'un ou plusieurs additifs des groupes des agents émulsionnants, des agents antimousses, des agents de conservation, des antioxydants, des colorants et/ou des matières de charges inertes.

3. Procédé pour combattre les oeufs et les états de nymphes des mouches blanches, **caractérisé en ce que** l'on applique une quantité efficace d'au moins un insecticide de la série des néonicotinyles par pulvérisation d'un concentré en suspension à base d'huile, sur des plantes,
dans lequel le concentré en suspension contient
- au moins un insecticide de la série des néonicotinyles,
- au moins un promoteur de pénétration,
- au moins une huile végétale,
- au moins un tensioactif non ionique respectivement auxiliaire de dispersion et/ou au moins un tensioactif anionique respectivement auxiliaire de dispersion et
- éventuellement un ou plusieurs additifs des groupes des agents émulsionnants, des agents antimousses, des agents de conservation, des antioxydants, des colorants et/ou des matières de charges inertes.
